# EUROPÄISCHE PATENTSCHRIFT

(11) **EP 3 754 824 B1**
(45) Veröffentlichungstag und Bekanntmachung des Hinweises auf die Patenterteilung: **09.03.2022**
(21) Anmeldenummer: 20153843.6
(22) Anmeldetag: 27.01.2020
(51) Int. Cl.: H02K 35/06, H02K 7/18, F01B 11/00

(54) **GASKINETISCHER TRANSFORMATOR**
GAS KINETIC TRANSFORMER
TRANSFORMATEUR BASÉ SUR LA THÉORIE CINÉTIQUE DES GAZ

(30) Priorität: 19.06.2019 RU 2019119365
(43) Veröffentlichungstag der Anmeldung: 23.12.2020
(73) Patentinhaber: Kravtsov, Gleb, Moskau 111024 (RU)
(72) Erfinder: Kravtsov, Gleb, Moskau 111024 (RU)
(74) Vertreter: Jeck, Anton

(56) Entgegenhaltungen:
- EP-A1- 2 242 168
- WO-A1-2016/118062
- CN-A- 109 113 859
- GB-A- 2 332 988
- US-A1- 2014 265 696

## Beschreibung

### Erfindungsgebiet

Die Erfindung bezieht sich auf Kraftanlagen. Sie stellt einen Lineargenerator dar, der gleichzeitig als Motor funktioniert. Die Erfindung wandelt die Druckenergie eines Gasmediums in eine mechanische Bewegung und eine elektrische Energie um. Die Erfindung hat einen breiten Anwendungsbereich. Die vorliegende Erfindung ermöglicht es, Gasversorgungsnetze sowie Gasverteilungsstellen mit Energie zu versorgen. An diesen Gasverteilungsstellen wird der Gasdruck reduziert. Die Erfindung ermöglicht es, einfache Energiespeichersysteme zur Verminderung von Spitzenbelastungen zu bauen. Darüber hinaus lassen sich mit der Erfindung Energieunterbrechungen (Spannungsunterbrechungen) durch den Einsatz von Druckluft vermeiden. Aufgrund der Einfachheit und der Kompaktheit der Vorrichtung gemäß der Erfindung sowie dem Einsatz von Dampf können kompakte Vorrichtungen zur beiläufigen Energieerzeugung in Wärmeversorgungsnetzen für Zwecke der individuellen Hauswirtschaften entwickelt werden. Die Anwendung der Erfindung ermöglicht es auch, die Abgaswärme von Verbrennungsmotoren zu verwerten.

In der Erfindung ist Folgendes umgesetzt: Die mechanischen und elektrischen Teile sind in einer Vorrichtung zusammengefasst. Rotierende Teile und Übergänge, für die Dichtungen erforderlich sind, sind ausgeschlossen. Dadurch kann das Gehäuse hermetisch dicht ausgeführt werden. Diese Ausführung des Gehäuses verhindert Lecks und hält hohen Drücken stand. Dies ermöglicht es, neue dampferzeugende Stoffe mit höheren Siedetemperaturen anzuwenden. Zu solchen Stoffen gehören zum Beispiel Propylenglycol, Glycerin und sogar Natrium. Dadurch kann der Wirkungsgrad im Carnot-Kreisprozess wesentlich erhöht werden. Darüber hinaus können aufgrund der Stromerzeugungsanlagen dieses Kreisprozesses Anlagen mit einem höheren Grad an Energieeffizienz entwickelt werden. In Anlagen dieser Art werden die äußere Verbrennung des Brennstoffs oder die Strahlungsquelle bei der Wärmebildung genutzt.

### Stand der Technik

Auf dem Gebiet der Technik sind Lineargeneratoren weit verbreitet. In solchen Generatoren wird die Vibration oder werden sonstige mechanische Bewegungen zur Erzeugung von elektrischer Energie verwendet. In der Regel weisen solche Vorrichtungen eine geringe Leistung auf.

GB2332988A offenbart einen ähnlichen Generator, der eine lineare Oszillationsbewegung direkt verwendet, um Strom zu erzeugen, wobei die Oszillationbewegung von einem Verbrennungsmotor erzeugt wird. Bekannt sind auch Vorrichtungen, in denen die Lineargeneratoren als Teil des Verbrennungsmotors zum Einsatz kommen. Solche Vorrichtungen sind z. B. in den Patenten RU112537U1 und RU2453970 (JP2008-027923) beschrieben. Diese Vorrichtungen sind mit der Erfindung vergleichbar, da sie einen für den Motor und den Generator gemeinsamen Teil enthalten. Diese Überlagerung ist sehr nutzbringend, da sie den Aufbau der genannten Vorrichtungen vereinfacht. Jedoch wurde diese Überlagerung der Funktionen nicht zu einem Schlüsselfaktor, der der Massenverbreitung solcher Vorrichtungen dienen könnte. Die Hauptursache, die einer weiten Verbreitung solcher Vorrichtungen im Wege steht, liegt vermutlich am Versuch, diese Vorrichtungen in den Kreisprozess eines Verbrennungsmotors einzufügen. Dabei sind die Wicklungen und die Teile eines Magnetsystems in einem unmittelbaren Kontakt mit den Verbrennungsprodukten. Dadurch wird die Umsetzung noch zusätzlich erschwert. Ferner müssen Wicklungen und permanente Magnete im Aufbau der genannten Vorrichtung mehrfach wiederholt vorgesehen sein.

In der US 2014/265696 A1 ist ein elektrischer Generator beschrieben, der einen Aufbau mit einem innenliegenden Stator aus kreisförmig verteilten Magnetkörpern mit einer jeweils darauf angeordneten Spule und einem darum rotierenden Rotor mit verteilt darin angeordneten Permanentmagneten aufweist.

Aus der EP 2 242 168 A1 geht ein elektrischer Lineargenerator hervor, der einen Aufbau aufweist, bei dem eine Zylinderwandung von innen nach außen betrachtet eine Spule, mehrere darüber nebeneinander angeordnete Permanentmagneten und einen darüber angeordneten Magnetkörper als Stator aufweist. Während der, durch eine Fluidbewegung verursachten, Hin- und Herbewegung eines magnetisierbaren Tauchkolbens (Aktors) im Zylinder muss der Magnetkörper und ggf. das Zylindermaterial selbst, falls dieses aus magnetisierbarem Material hergestellt ist, selbst permanent vollständig ummagnetisiert werden, wodurch Verluste bei der Energieerzeugung entstehen. Nachteilig ist außerdem, dass die Spule nicht ständig vollständig vom magnetischen Fluss durchflossen wird, da die Länge des Tauchkolbens wesentlich geringer ist als die der Spule, und deshalb nicht die maximal mögliche Energie erzeugt wird.

Aus der WO 2016/118062 A1 ist ebenfalls ein elektrischer Lineargenerator bekannt, der einen Zylinder mit in die Zylinderwandung integrierter Spule aufweist, wobei das Material des Zylinders unbekannt ist. Die Spule bildet dabei den Stator und ein Tauchkolben (Aktor) aus permanentmagnetischem Material wird durch ein Fluid im Zylinder hin- und herbewegt. Wenn man unterstellt, dass der Zylinder aus nichtmagnetisierbarem Material besteht, dann wird durch das Fehlen eines Magnetkörpers im Stator nur vergleichsweise wenig Energie erzeugt. Sollte der Zylinder hingegen aus magnetisierbarem Material bestehen, so entstehen durch die permanente Ummagnetisierung hohe Verluste bei der Energieerzeugung. Da die Länge der Spule wesentlich größer als die Länge des Tauchkolbens ist, findet die Energieerzeugung außerdem immer nur in dem Teil der Spule statt, der gerade vom Tauchkolben überdeckt wird.

Die CN 109113859 A weist einen zur WO 2016/118062 A1 ähnlichen Aufbau auf, wobei der Zylinder aus einem magnetisierbaren Material hergestellt ist. Die Länge des Tauchkolbens (Aktor) entspricht zwar im Wesentlichen der Länge der Spule, wodurch ein maximaler magnetischer Fluss gegeben ist, jedoch entstehen im Zylinder, der als Magnetkörper für die Spule wirkt, wiederum hohe Verluste bei der Energieerzeugung durch dessen permanente Ummagnetisierung.

Es ist unmöglich, einen optimalen Verlauf der Verbrennung und eine Kraftstoffunempfindlichkeit in Verbrennungsmotoren zu vereinigen. Aus diesem Grund kommt eine abweichende Art Energie in der vorliegenden Erfindung zum Einsatz. Offenbarung der Erfindung

Zum Gegenstand der Erfindung gehört eine Vorrichtung nach Anspruch 1 , die die Energie gasförmiger Stoffe in elektrische Energie umwandelt. Die gasförmigen Stoffe stehen dabei unter hohem Druck.

Die in der Erfindung zum Einsatz kommende Energie ist die Energie des unter Druck stehenden Gases oder Dampfes. Dies erweitert den Anwendungsbereich der Erfindung. Darüber hinaus sind dadurch die Anforderungen an die Konstruktion und die anzuwendenden Werkstoffe niedriger.

Eine weitere wichtige Besonderheit der Erfindung besteht darin, dass nur eine Wicklung erforderlich ist. Die Permanentmagnete eines Magnetkörpers sind aus dem Bereich der eventuell hohen Temperaturen entfernt und befinden sich ausserhalb der Einwirkung von diesen. Dies ermöglicht es, Werkstoffe mit niedriegeren Curie-Temperaturen anzuwenden als bei den Prototypen.

### Ausführungsbeispiel

Die Erfindung wird nun anhand eines Ausführungsbeispiels näher erläutert. Es zeigen:
- Fig. 1: eine Gesamtansicht der vorliegenden Vorrichtung;
- Fig. 2: eine Schnittdarstellung des Zylinderteils der vorliegenden Vorrichtung; diese Schnittdarstellung zeigt die eingebauten Teile innerhalb des Zylinders; im Großen und Ganzen sieht die Vorrichtung wie eine Symbiose von Transformator und Dampfmaschine aus; darauf ist auch die Bezeichnung "Parotrans" ("Dampftrans") zurückzuführen.

Es ist bekannt, dass es zur Erzeugung von elektrischer Energie in der Wicklung mit einem Leiter 1 notwendig ist, ein magnetisches Wechselfeld darin zu erzeugen. Dabei ist die Wicklung um eine Spule 2 gewickelt. Ist die Wicklung an einem Mittelstab 3 eines kammförmigen Magnetkörpers angeordnet, der aus einem Joch 4 und Seitenstäben 5 und 6 besteht, und werden dabei in den Seitenstäben 5 und 6 gegenläufig fließende magnetische Flüsse mit Hilfe von Einsätzen aus Permanentmagneten erzeugt, und wird eine konstante remanente Magnetisierung vorgegeben, so kann durch das Wechseln der Schlussgebung von magnetischen Flüssen der Seitenstäbe an dem Mittelstab eine wechselwirkende (schwingende) elektromotorische Kraft in der Wicklung erzeugt werden. Um solche periodischen Schlussgebungen eines magnetischen Flusses zu schaffen, wird ein Tauchkolben (Plunger) 7 eingesetzt. Der Tauchkolben 7 bewegt sich innerhalb des Zylinders 8. Der Tauchkolben wird aus einem Werkstoff mit einer hohen magnetischen Permeabilität ausgeführt. Der Zylinder wird dünnwandig ausgebildet. Er kann sowohl aus einem ferromagnetischen als auch einem paramagnetischen Werkstoff ausgeführt sein. Bei einer geringen Wandstärke spielt es keine große Rolle. Dabei ist es ratsam, dass der Werkstoff einen hohen elektrischen Widerstand aufweist. Dies ist erforderlich, um maximal hohe Widerstände bei der Bewegung des Tauchkolbens zu erzeugen. Solche Widerstände sind für Wirbelströme in den Stromkreisen nötig. Die Stromkreise werden durch die Zylinderwände gebildet. Die Zylinderwände stellen keine wesentlichen Hindernisse für ein Magnetfeld dar. So grenzen die Zylinderwände das Medium innerhalb des Zylinders vom Außenmedium ab. Dies ermöglicht es, die Aufgabe der Wärmeberechnung für die Wicklung und die Magnetkörperteile sowie die Aufgabe der Wärmeberechnung für die Bewegung des Tauchkolbens im Zylinder bei der Gestaltung der Vorrichtung und bei der Auswahl von deren Parametern getrennt zu betrachten. Der Zylinder ist von beiden Seiten mit Deckeln 9 und 10 zugedeckt. Die Deckel 9 und 10 haben Stutzen für die Zu- und Abführung eines gasförmigen Energieträgers. Der Tauchkolben befindet sich im Zylinder und bildet Hohlräume 11 und 12 innerhalb des Zylinders aus, d. h. zwischen dem Tauchkolben selbst und den Zylinderdeckeln. Die Hohlräume 11 und 12 weisen ein sich änderndes Volumen auf. Das sich ändernde Volumen hängt von der Position des Tauchkolbens ab. Dämpfungsfedern 13 dienen zur Speicherung und Rücklieferung der Bewegungsenergie des Tauchkolbens in den Endpunkten. Auf den Einsatz von Federn kann verzichtet werden, wenn die Zuführung des Energieträgers in die Hohlräume auf eine bestimmte Weise eingerichtet ist.

In diesem Fall erfolgen die Aufnahme und die Rücklieferung der Bewegungsenergie des Tauchkolbens in den Endpunkten durch die Kompression und die Ausdehnung des Gasmediums. Das Gasmedium befindet sich in den Hohlräumen.

Ein Verteiler des komprimierten gasförmigen Mediums führt dieses Medium abwechselnd dem jeweiligen Hohlraum 11 und 12 zu. Der Verteiler ist außerhalb in Bezug auf die vorliegende Vorrichtung angeordnet. Der Verteiler kann eine beliebige von den im Gebiet der Technik bekannten Ausführungen haben. Der Verteiler kann auch eine Ausführung der Verteiler der Dampfmaschinen aus dem 19. - 20. Jahrhundert wiederholen. Der Verteiler kann über elektrisch gesteuerte Ventile und einen Steuerimpulsgenerator gesteuert werden. Der Verteiler kann auch anhand von Kanälen im Tauchkolben und Durchbrechungen an bestimmten Stellen des Zylinders eingerichtet werden. Die Durchbrechungen steuern das Fließen des Energieträgers genauso, wie dies in Zweitaktmotoren realisiert ist.

Wird ein gasförmiges Medium dem Hohlraum 11 unter einem hohen Druck zugeführt, verschiebt sich der Tauchkolben nach rechts. Wenn sich dabei der Tauchkolben vor dem Bewegungsbeginn links befand, dann schloss er den magnetischen Fluss, der über die Stäbe 3 und 5 des Magnetkörpers und teilweise über das Joch 4 floss. Wenn sich der Tauchkolben verschiebt, unterbricht er diesen magnetischen Fluss. Der Tauchkolben bewegt sich in die rechte Endposition und schließt den magnetischen Fluss. Dieser magnetische Fluss fließt über die Stäbe 3, 6 und teilweise über das Joch 4.

Die Stäbe 5 und 6 sind ungleichsinnig magnetisiert. Deswegen ändert sich die Polarität des magnetischen Flusses im Stab 3 bei der Bewegung (Verlagerung) des Tauchkolbens. Wird ein Energieträger dem Hohlraum 12 zugeführt, verschiebt sich der Tauchkolben rückwärts von rechts nach links. Der Tauchkolben bewirkt wiederum die Änderung der Flussrichtung über den Stab 3 und somit über die Spule mit der Wicklung 1. Die magnetischen Flüsse in den Elementen 4, 5 und 6 des Magnetkörpers und im Tauchkolben 7 ändern ihre Richtungen nicht. Deswegen können sie aus magnetisch harten ferromagnetischen Materialien hergestellt werden. Die Ummagnetisierungsverluste sind dabei relativ gering.

Der Stab 3 funktioniert in einem alternierenden Magnetfeld. Der Stab 3 muss aus einem magnetisch weichen ferromagnetischen Werkstoff mit geringen Ummagnetisierungsverlusten ausgebildet werden.

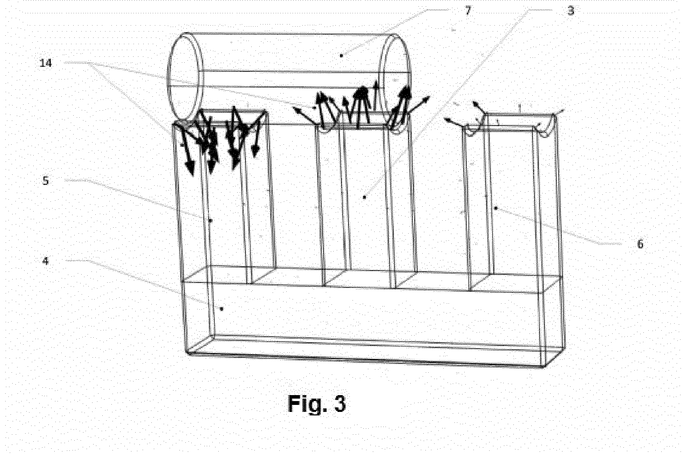

In Fig. 3, Fig. 4 und Fig. 5 ist ein Teil der Ergebnisse einer mathematischen Modellierung eines magnetischen Flusses mit dem Tauchkolben in verschiedenen Positionen dargestellt.

Bei der Stellung der Aufgabe der Modellierung wurde vorgegeben, dass die Magnetisierung des Stabs 5 einen nach unten gerichteten Vektor hat. Die Magnetisierung des Stabs 6 hat einen nach oben gerichtetem Vektor.

Die Aufgabe der Modellierung war es, die Abhängigkeit zwischen der Größe und der Richtung des magnetischen Flusses im Mittelstab 3 zu untersuchen. Die Ergebnisse der Berechnung wurden im Berechnungsprogramm in Form von Vektoren 14 dargestellt. Die Richtung und die Größe der Vektoren entsprechen den Parametern des magnetischen Flusses im Punkt der Vektorposition.

In Fig. 3 sind die Ergebnisse der Modellierung mit dem Tauchkolben in der linken Endposition gezeigt. Die ermittelten Ergebnisse zeigen, dass die Stäbe 5 und 3 die stärksten Flüsse haben. Der Fluss im Stab 3 ist dabei nach oben gerichtet. Der Fluss im Stab 6 ist schwach, da sein Magnetfeld nur über einen Luftspalt geschlossen werden kann. Dies lässt sich anhand der einzelnen kleinen unterschiedlich gerichteten Vektoren erkennen. Der Luftspalt hat dabei einen hohen magnetischen Widerstand.

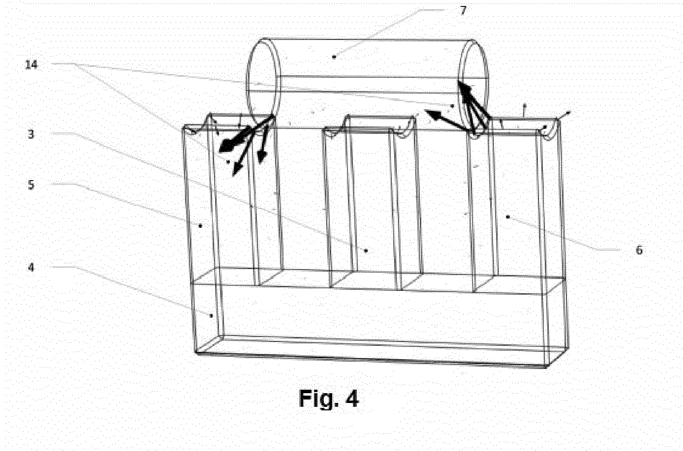

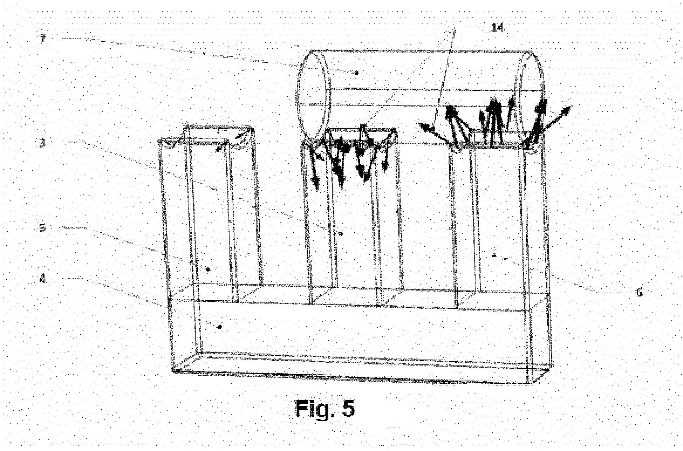

In Fig. 4 sind die Ergebnisse der Modellierung mit dem Tauchkolben in der Mittelposition dargestellt. Die Stäbe 5 und 6 haben heteropolare Magnetisierung gleicher Stärke und sind untereinander mit dem Joch von unten und dem Tauchkolben von oben geschlossen. Deswegen fließt der magnetische Fluss über den Tauchkolben, ohne in den Stab 3 zu gelangen. Hier lässt sich feststellen, dass im Stab 3 keine Magnetisierung vorliegt, wenn der Tauchkolben in der Mittelposition ist. Bewegt sich der Tauchkolben nach rechts, läuft der Vorgang ab, der in Fig. 5 dargestellt ist. Die Stäbe 6 und 3 weisen die stärksten Flüsse auf. Der Fluss im Stab 3 ist dabei nach unten gerichtet.

Somit zeigt die Analyse der Vorgänge, die in Fig. 3, Fig. 4 und Fig. 5 dargestellt sind, Folgendes: Bei der Bewegung des Tauchkolbens aus einer Endposition in die andere ändert sich im Mittelstab die maximale Stärke des magnetischen Flusses einer Richtung auf die maximale Stärke der Gegenrichtung. Folglich wird in der Wicklung bei der Hin- und Rückbewegung des Tauchkolbens eine schwingende elektromotorische Kraft erzeugt. Die Wicklung ist am Mittelstab angeordnet.

Die erzeugte Spannung kann zur Speisung von Belastungen sowohl direkt als auch unter Einsatz von Ventilschaltungen (Gleichrichterschaltungen) und einer Umwandlung von elektrischer Energie in bestimmte Formen benutzt werden. Diese Formen entsprechen denjenigen, die gemäß den Anforderungen des Verbrauchers nach den Parametern der Frequenz und der Nennspannung erforderlich sind.

### Kurzbeschreibung der Zeichnungen

Es zeigen:

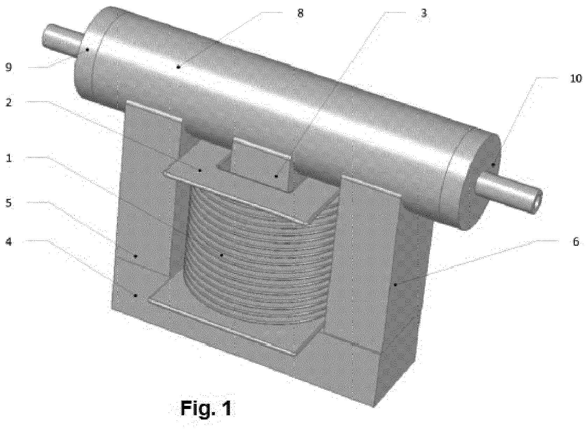

- Fig. 1: die Gesamtansicht der erfindungsgemäßen Vorrichtung. In der Figur sind dargestellt:
1 stromleitende Wicklung eines isolierten Leiters;
2 Spule für die Anordnung des Leiters und dessen Isolierung von einem Magnetkörper;
3 Mittelstab des Magnetkörpers;
4 Joch des Magnetkörpers;
5 Stab des Magnetkörpers; die Magnetisierung des Stabs 5 ist in der Richtung zum Joch hin vorgegeben;
6 Stab des Magnetkörpers; die Magnetisierung des Stabs 6 ist in der Richtung vom Joch her vorgegeben;
8 Zylinder;
9 linker Deckel des Zylinders mit einem Eintrittsstutzen;
10 rechter Deckel des Zylinders mit einem Eintrittsstutzen.

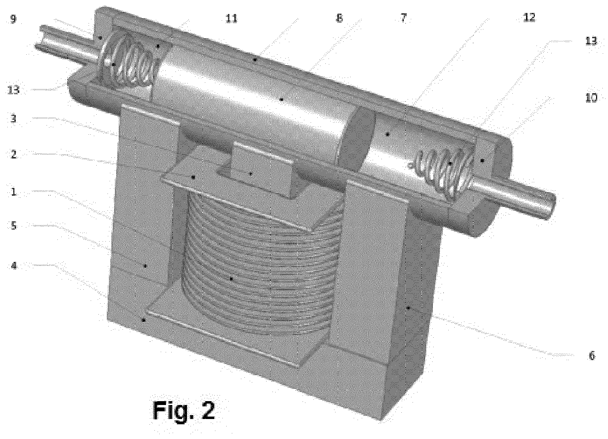

- Fig. 2: die Gesamtansicht der Vorrichtung mit dem Zylinder im Schnitt. Diese lässt die eingebauten Teile innerhalb des Zylinders erkennen. In der Figur sind dargestellt:
1 stromleitende Wicklung eines isolierten Leiters;
2 Spule für die Anordnung des Leiters und dessen Isolierung von einem Magnetkörper;
3 Mittelstab des Magnetkörpers;
4 Joch des Magnetkörpers;
5 Stab des Magnetkörpers; die Magnetisierung des Stabs 5 ist in der Richtung zum Joch hin vorgegeben;
6 Stab des Magnetkörpers; die Magnetisierung des Stabs 6 ist in der Richtung vom Joch her vorgegeben;
7 Tauchkolben;
8 Zylinder;
9 linker Deckel des Zylinders mit einem Eintrittsstutzen;
10 rechter Deckel des Zylinders mit einem Eintrittsstutzen;
11 Zylinderraum links von dem Tauchkolben;
12 Zylinderraum rechts von dem Tauchkolben;
13 Dämpfungsfedern.
- Fig. 3: einen Teil der Ergebnisse von Solid-Modelling des magnetischen Flusses in den Teilen des Magnetkörpers mit dem Tauchkolben in der linken Endposition. In der Figur sind dargestellt:
3 Mittelstab des Magnetkörpers;
4 Joch des Magnetkörpers;
5 Stab des Magnetkörpers; die Magnetisierung des Stabs 5 ist in der Richtung zum Joch hin vorgegeben;
6 Stab des Magnetkörpers; die Magnetisierung des Stabs 6 ist in der Richtung vom Joch her vorgegeben;
7 Tauchkolben;
14 Vektoren des magnetischen Flusses.
- Fig. 4: einen Teil der Ergebnisse von Solid-Modelling des magnetischen Flusses in den Teilen des Magnetkörpers mit dem Tauchkolben in der Mittelposition. In der Figur sind dargestellt:
3 Mittelstab des Magnetkörpers;
4 Joch des Magnetkörpers;
5 Stab des Magnetkörpers; die Magnetisierung des Stabs 5 ist in der Richtung zum Joch hin vorgegeben;
6 Stab des Magnetkörpers; die Magnetisierung des Stabs 6 ist in der Richtung vom Joch her vorgegeben;
7 Tauchkolben;
14 Vektoren des magnetischen Flusses.
- Fig. 5: einen Teil der Ergebnisse von Solid-Modelling des magnetischen Flusses in den Teilen des Magnetkörpers mit dem Tauchkolben in der rechten Endposition. In der Figur sind dargestellt:
3 Mittelstab des Magnetkörpers;
4 Joch des Magnetkörpers;
5 Stab des Magnetkörpers; die Magnetisierung des Stabs 5 ist in der Richtung zum Joch hin vorgegeben;
6 Stab des Magnetkörpers; die Magnetisierung des Stabs 6 ist in der Richtung vom Joch her vorgegeben;
7 Tauchkolben;
14 Vektoren des magnetischen Flusses.

### Ausführung der Erfindung

Da der Aufbau der Vorrichtung einfach ist, lässt sich die Vorrichtung von den meisten Unternehmen der elektrotechnischen Industrie ohne hohe Investitionen umsetzen. Der Aufbau der Vorrichtung und eine einfache Funktionsweise ermöglichen es, gut bewährte mathematische Methoden der Auslegung der elektrischen Anlagen anzuwenden. Die Anwendung von moderner Software vereinfacht zusätzlich den Einsatz dieser mathematischen Methoden zu praktischen Zwecken.

In den meisten Ausführungsformen der Vorrichtung wird sich der Zylinder auf einem höheren Niveau als die Spule (oberhalb der Spule) samt dem Leiter und dem Magnetkörper befinden. Dadurch kann die Wärme, die sich beim Stromdurchgang über die Wicklung bildet, in die Richtung zum Zylinder hin strömen. Falls Dampf eingesetzt wird, wird dabei der Zylinder die Spule und den Magnetkörper nicht erwärmen.

Es sei erwähnt, dass in bestimmten Fällen es jedoch sinnvoll sein könnte, den Zylinder unterhalb der Spule und des Magnetkörpers anzuordnen.

Ferromagnetische Eigenschaften der Werkstoffe für die Herstellung des Magnetkörpers, insbesondere die Curie-Temperatur, sind unter Berücksichtigung der Temperatur des Energieträgers zu wählen.

Die Funktionsfähigkeit der Vorrichtung wurde anhand eines mathematischen und eines physikalischen Modells geprüft.

### Informationsquellen

1. RU 112537 U1 "Elektrischer Wechselstromgenerator".
2. RU 2453970 U1 "Lineargenerator".

## Patentansprüche

1. Vorrichtung zur Erzeugung von Wechselstrom, umfassend einen kammförmigen Magnetkörper, der aus einem Joch und drei im Wesentlichen senkrecht dazu stehenden Stäben besteht, nämlich einem Mittelstab und zwei zum Mittelstab im Wesentlichen parallel stehenden Seitenstäben, eine Wicklung, die an dem Mittelstab angeordnet ist, einen Tauchkolben, der sich in einem Zylinder befindet und Hohlräume innerhalb des Zylinders ausbildet, wobei eine induzierte Spannung in der Wicklung durch die periodische Bewegung des Tauchkolbens entsteht, wobei der Tauchkolben (7) aus einem Werkstoff mit einer hohen magnetischen Permeabilität besteht, wobei der Tauchkolben (7) durch Dampf- oder Gasausdehnung in Bewegung gebracht ist, wobei der Dampf oder das Gas dabei unter Druck steht, und wobei der Dampf oder das Gas periodisch in den einen oder anderen Hohlraum des Zylinders (8) zugeführt ist, wobei der Tauchkolben in den Endpositionen jeweils einen der magnetischen Flüsse der Seitenstäbe über den Mittelstab schließt, und wobei die Seitenstäbe (5, 6) ungleichnamige permanente Magnetisierungen aufweisen.

2. Vorrichtung nach Anspruch 1,
**dadurch gekennzeichnet,**
**dass** nur ein Teil des Tauchkolbens (7) aus einem Werkstoff mit einer hohen magnetischen Permeabilität ausgeführt ist.

3. Vorrichtung nach Anspruch 1,
**dadurch gekennzeichnet,**
**dass** der Tauchkolben (7) eine remanente Magnetisierung hat, die mit der Magnetisierung der Seitenstäbe (5, 6) übereinstimmt.

4. Vorrichtung nach Anspruch 1,
**dadurch gekennzeichnet,**
**dass** das Joch (4) des kammförmigen Magnetkörpers eine permanente Magnetisierung aufweist, die mit der Magnetisierung der Seitenstäbe (5, 6) übereinstimmt.

5. Vorrichtung nach Anspruch 1,
**dadurch gekennzeichnet,**
**dass** der Schnitt des Tauchkolbens (7) und des Zylinders (8) von einer runden Form abweicht.

## Claims

1. Device for generating alternating current, comprising a comb-shaped magnet body consisting of a yoke and three rods substantially perpendicular thereto, namely a centre rod and two side rods substantially parallel to the centre rod, a winding arranged on the centre rod, a plunger located in a cylinder and forming cavities within the cylinder, wherein an induced voltage is generated in the winding by the periodic movement of the plunger, wherein the plunger (7) is made of a material with a high magnetic permeability, wherein the plunger (7) is set in motion by vapour or gas expansion, the vapour or gas thereby being under pressure, and wherein the vapour or gas is periodically fed into one or the other cavity of the cylinder (8), wherein the plunger in the end positions closes each one of the magnetic fluxes of the side bars via the centre bar, and wherein the side bars (5, 6) have unequal permanent magnetisations.

2. Device according to claim 1,
**characterised in that**
that only a part of the plunger (7) is made of a material with a high magnetic permeability.

3. Device according to claim 1,
**characterised in that**
**in that** the plunger (7) has a remanent magnetisation which corresponds to the magnetisation of the side rods (5, 6).

4. Device according to claim 1,
**characterised in that**
**in that** the yoke (4) of the comb-shaped magnetic body has a permanent magnetisation which corresponds to the magnetisation of the side bars (5, 6).

5. Device according to claim 1,
**characterised in that**
that the section of the plunger (7) and the cylinder (8) deviates from a round shape.

## Revendications

1. Dispositif pour la génération du courant alternatif se composant d'un corps magnétique en forme de peigne se composant d'un joug et de trois barres essentiellement positionnées en perpendiculaire, en l'occurrence d'une barre moyenne et de deux barres latérales essentiellement positionnées parallèlement, d'un enroulement disposé au niveau de la barre moyenne, d'un piston plongeur se situant au niveau d'un cylindre formant des cavités à l'intérieur du cylindre produisant une tension induite dans l'enroulement par le biais du mouvement périodique du piston plongeur où le piston plongeur (7) se compose d'un matériel dans une haute perméabilité magnétique où le piston plongeur (7) bouge par le biais de l'expansion de la vapeur ou du gaz où la vapeur ou le gaz sont mis sous pression et où la vapeur ou le gaz sont alimentés périodiquement dans une cavité ou dans une autre cavité du cylindre (8) où le piston plongeur ferme respectivement au niveau des positions finales l'un des fleuves magnétiques des barres latérales via la barre moyenne et où les barres latérales (5,6) présentent des magnétisations permanentes qui ne sont pas éponymes.

2. Dispositif selon la revendication 1 est caractérisé de sorte qu'uniquement une partie du piston plongeur (7) est exécutée d'un matériel avec une haute perméabilité magnétique.

3. Dispositif selon la revendication 1 est caractérisé de sorte que le piston plongeur (7) présente une magnétisation rémanente correspondant à la magnétisation des barres latérales (5,6).

4. Dispositif selon la revendication 1 est caractérisé de sorte que le joug (4) du corps magnétique en forme de peigne présente une magnétisation permanente concordant avec la magnétisation des barres latérales (5,6).

5. Dispositif selon la revendication 1 est caractérisé de sorte que la coupe du piston plongeur (7) et du cylindre (8) diffèrent de la forme circulaire.
